# EUROPEAN PATENT APPLICATION

(11) **EP 1 079 566 A2**
(43) Date of publication of application: **28.02.2001**
(21) Application number: 00116009.2
(22) Date of filing: 26.07.2000
(51) Int. Cl.: H04L 12/24

(54) **System management in a communications network comprising SNMP and CMIP agents**

(30) Priority: 23.08.1999 GB 9919751
(71) Applicant: Motorola Ireland Limited, St. Stephens Green, Dublin 2 (IE)
(72) Inventor: French, Paul, Dublin Pike, Cork, Ireland (IE); Feng, Jie, Surrey, BC, Canada V 35 8L7 (US)
(74) Representative: Potts, Susan Patricia

(57) **Abstract**

A network management architecture that manages both CMIP and SNMP devices and presents the same information to the operator irrespective of the protocol used. It includes a smart SNMP agent, which has OSI agent functions, such as, alarm tables, event forwarding discriminators. It also includes a SNMP trap definition to align with the X733 standard.

## Description

The present invention relates to protocol architectures for use in network management of telecommunications systems, methods of managing telecommunications networks, telecommunications network management systems and alarm reporting and management.

The International Standards Organisation (ISO) is currently working on sets of standards for permitting communications between different network management systems. The open systems interface (OSI) committee has developed a basic reference model which describes an architecture in which data communications activities are partitioned into a plurality of functional layers with each layer performing a specific data communication task.

OSI management provides a common language and protocol specification in order to permit network management elements manufactured by different vendors to be able to exchange network management information on a world-wide basis.

Many computer systems, including those that control network elements, are equipped with management facilities conforming to SNMP (simple network management protocol). Similarly, many of the aforementioned computer systems are alternatively equipped with ISO-oriented management protocols, in particular CMIP (common management information protocol). It is likely that CMIP and SNMP will co-exist for a long period of time.

Patent Application WO-A-98/02993 discloses a method for facilitating a sharing of communication resources between SNMP and CMIP in a telecommunications system, the system including a network management centre and several network elements. Network management data is transmitted over a link employing CMIP and SNMP with SNMP based management protocols being re-used as transport mechanisms for CMIP protocol data units.

However, the above known method is restricted to mapping of CMIP protocol managers to equivalent SNMP messages. It cannot specify a mapping of OSI system management functions onto SNMP devices.

In a typical network management system, network devices (e.g. servers, gateways, hosts) are provided with agent software (an "agent") that monitors and accumulates operational data and detects exceptional events. A management station includes management software (a "manager") at the application level which requests operational data or receives event notifications from the agent using management protocols. The management station is further equipped to interpret the operational data and event information to effect control of the network operations.

The SNMP, for example, specifies the format and meaning of messages exchanged between managers and agents. A virtual information store, termed a management information base (MIB) defines the management data or objects by specifying the data variables which a network element must keep.

SNMP uses a fetch-store method to effect operations between a manager and an agent. Specifically, SNMP defines get-request, get-next-request, get-response and set-request commands which provide the basic fetch and store operations. In addition, SNMP defines a trap command by which an agent asynchronously sends information to a manager triggered by an event. Thus, a management station requests operational data or receives event notifications by means of this simple set of SNMP commands.

Patent Application EP-A-0831617 discloses a flexible trap mechanism which allows a user to configure new SNMP traps at the manager without the need to install new MIB-s on an SNMP agent. However, this proposal still requires operator intervention, such as executing a new GUI (graphical user interface) in order to support new traps. Furthermore, no known SNMP agent can manage a list of current conditions in a network element nor can it match the clearing of those fault conditions.

According to one aspect, the invention consists of a communications network element incorporating a SNMP agent in which said SNMP agent is provided with a trap definition for supporting a conversion to ISO system management functions and in which the trap definition includes (i) a class identifier configured as a variable-binding in the trap for generating a class of a managed object associated with the element, and (ii) a least one instance identifier configured as a variable-binding in the trap for generating the instance of a managed object associated with the element.

The network element of several such elements may be incorporated in a network which is run by a network manager.

The invention thus enables information in a trap to be used to generate the managed objet class and instance of the source network element which issued a notification (e.g. an alarm notification) to the network manager. The mechanism for doing this is to (I) put the class identifier as variable-binding in the trap which is used to generate the class of the managed object which issued the notification and (ii) put instance identifiers as variable-bindings in the trap which are used to generate the instance of the managed object which issued the notification.

The mapping of the instance identifiers in the trap to the managed object instance will be the same in all cases; i.e. for any type of function; such as alarm reporting, event management function, etc.

According to another aspect of the present invention, a network management system is provided as recited in Claim 3 herein below.

According to other aspects of the present invention, methods for operating a network element, managing an alarm condition and for detecting a loss of synchronism in a network management system are provided as recited in subordinate Claims 6 and 10 herein below.

Some embodiments of the invention will now be described by way of example only, with reference to the drawings of which;
Figure 1 is a schematic diagram of the basic constituents of a known network management system,
Figure 2 is a schematic diagram of the basic constituents of an alarm management system in accordance with the invention, and
Figure 3, is a diagram illustrating SNMP to GDMO mapping.

The present invention proposes the concept of a Smart SNMP agent. It proposes an apparatus and mechanism whereby SNMP devices themselves will support ISO systems management functions. These functions include:
(1) SNMP devices supporting OSI systems management functions such as Alarm Reporting Function. This includes a definition of an SNMP trap which is aligned with the alarm definition defined in CCITT X.733. This means that a manager can automatically generate an equivalent X.733 alarm from the data in the trap. No other software is required and no operator invention is required to support new traps. In a hetergeneous network comprising CMIP devices supporting X.733 and SNMP devices supporting the traps defined here, a single piece of software can be written to interpret and present the same information to the operator irrespective of the protocol supported by the device.
(2) A throttling function which allows an operator to restrict the flow of alarms sent from an SNMP agent to the manager.
(3) A mechanism to support alarm synchronisation between an SNMP agent and a manager in a connectionless environment.
   This invention also specifies a systems solution which proposes a mechanism in which the same alarm information is presented to the operator irrespective of the protocol (CMIP or SNMP) of the underlying network element. This mechanism allows operators to view all the fault information of the system in the same way, thus enabling them to troubleshoot their systems more effectively.

An aim of the present invention is to move the systems management functions to the SNMP agents themselves. Both (a) SNMP agents supporting the interface defined here and (b) managers presenting the information will not have to change software to support new traps. This makes it easier and cheaper to manage hetergeneous networks comprising a combination of CMIP and SNMP devices. Furthermore, operator intervention, such as executing a GUI to support new traps is not required.

A further aim of the present invention is to specify a mapping of OSI systems management functions, i.e. in the management information itself, onto SNMP devices.

A further aim of the present invention is to provide a systems solution which specifies a network management system which manages devices supporting both the CMIP and SNMP protocols by specifying both manager and agent functionality to support this. It also aims to deal with management issues relating to connectionless networks.

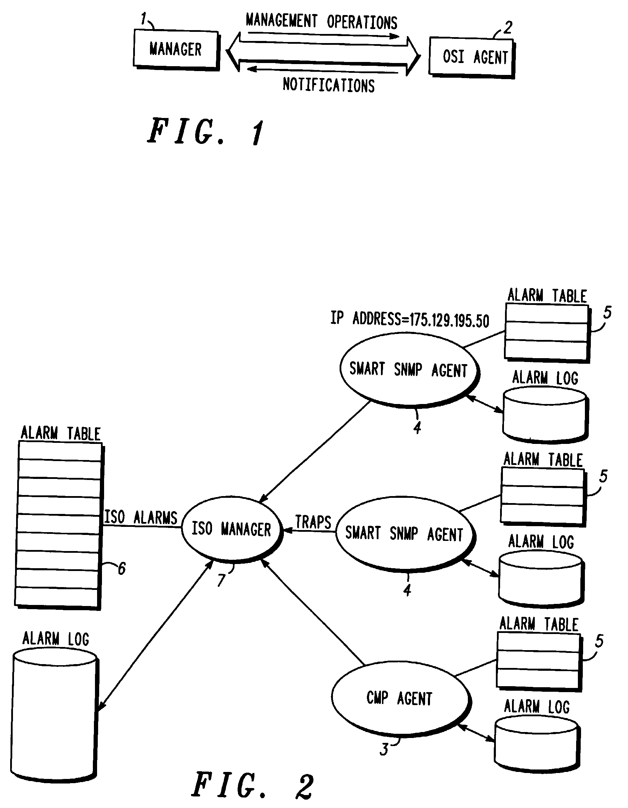

In the OSI systems management model (see Fig. 1), network management interaction occurs between a manager 1 and an agent 2. The manager 1 performs network management operations on Managed Objects residing in the Network Element through an OSI Agent 2. The managed objects also issue asynchronous information to the manager using Notifications/Events.

One subset of these type of events are those used to issue information relating to faults that occur in the network element. These are called alarms and ISO defines a systems management function to describe these alarms. It is called Alarm Reporting Function and is detailed in the X.733 standard.

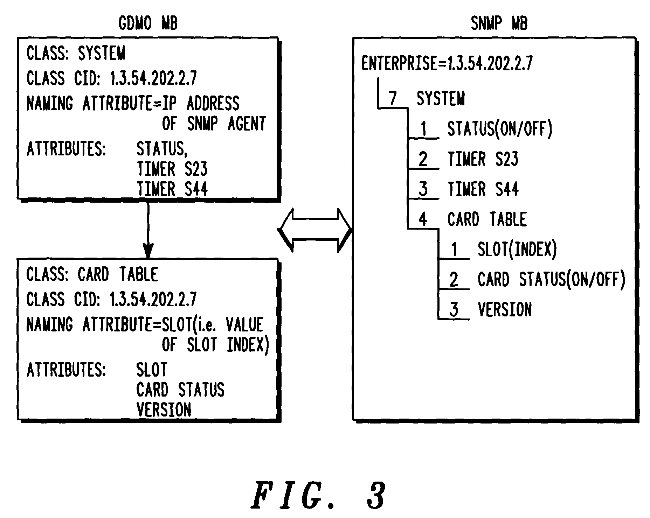

A CMIP agent 3 (see Figure 2) typically supports the concept of maintaining a list of current alarms or faults that are present in the network element. It supports the concept of the clearing of these alarms/faults either by the Network Element itself or though operator intervention. An OSI agent reports faults using Alarm Notifications. The data in these events includes Object Class, Object Instance, Alarm Type, Time, Severity, Probable Cause and any other additional information relevant to the particular alarm. In particular, when a network element detects that the fault is cleared, the OSI agent reports this to the manager by sending the original alarm notification with exactly the same information but the Severity field set to Clear.

A typical SNMP agent, certainly an SNMPv1 agent, does not support the concept of maintaining a list of current alarms or faults that are present in the network element. It reports information to a network manager when the value of a parameter changes, say to a value of OFF. This information often represents a fault condition. It reports this information using the SNMP Trap mechanism. When the value of that parameter changes back to the ON State, a DIFFERENT Trap is sent to the manager. It is up to the manager to correlate between the OFF Trap and the ON Trap to simulate clearing of alarms or faults.

Another essential difference between ISO alarm management and SNMP is end-to-end reliability. In ISO alarm management, there are mechanisms to ensure that the manager has received the alarm. This is achieved either using the confirmed event mechanism or by reliable transport layer. Confirmed event mechanisms are not defined until SNMPv2 and many SNMP devices operate on connectionless transport layer protocol such as UDP.

This invention proposes a network management architecture that presents the same alarm information irrespective of the underlying protocols used to manage the network elements, It provides for an ISO alarm handling architecture in which both CMIP and SNMP protocols are used to manage the network elements. It covers an SNMP trap definition to align with the X.733 standard. It proposes the concept of a smart SNMP agent 4 residing on a network element which has agent functions, such as alarm tables 5, Event Forwarding Discriminators, etc. It also deals with alarm synchronization issues in connectionless networks.

The mapping of an SNMP Management Information Base (MIB) to an OSI MIB is specified by the ISO. In summary if one looks at the Object Identifier (OID) tree of an SNMP MIB (see Figure 3), every leaf node on an SNMP MIB will be a GDMO attribute. Every SNMP branch will be a GDMO class. Every SNMP branch, which is a table, will have multiple GDMO instances. Every non-table SNMP branch will be a singleton object.

An OSI MIB has the concepts of Managed Objects, Containment, Inheritance, etc. An SNMP MIB essentially is specified in terms of parameters and tables. An OSI MIB is specified in terms of Managed Objects and they are usually specified using GDMO (Guidelines for the Definition of Managed Objects -x.721).

In order to put a mechanism in place to convert from an SNMP trap issued from a device to an ISO Alarm Notification representing that fault, it is first necessary to model the SNMP MIB as a GDMO MIB in the manager.

Consider, for example, an SNMP MIB as illustrated in Figure 3.

Here, there is a system with a status parameter, a couple of timers and a CardTable representing hardware cards. This CardTable has three columns with the Slot column as the index into the table. The equivalent GDMO representation of this system is also illustrated in Figure 3. There are two classes, a *system* class and a *CardTable* class. The *system* is a singleton class (i.e. only one instance). The Relative Distinguished Name (RDN) instance value (this is the unique value of the object instance) of the system object will be the IP address of the SNMP agent. The *CardTable* class can have multiple instances, and the RDN instance value will be the *Slot* attribute because it is the index and so will be unique for each instance.

A method of defining a Trap definition to support the conversion to ISO X.733 alarm format is as follows. This is illustrated in Table 1 below (note M/O indicate Mandatory and Optional respectively). The intention is that the SNMP agent should issue traps of this format to the manager when notifying the manager of alarms or faults in the network element. There should be enough information in this trap to data drive the generation of an equivalent ISO alarm in the manager. A number of issues are explained later:
- Identification of object instance
- Alarm uniqueness.
   On receipt of a trap, how does the manager know if this a new alarm or a duplicate?

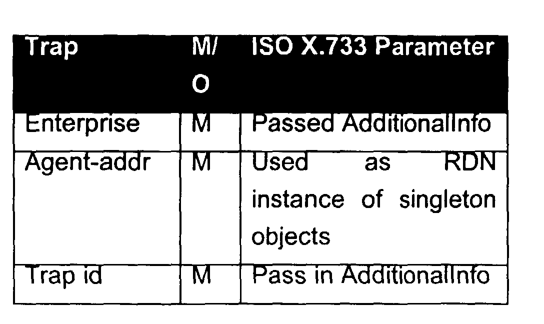

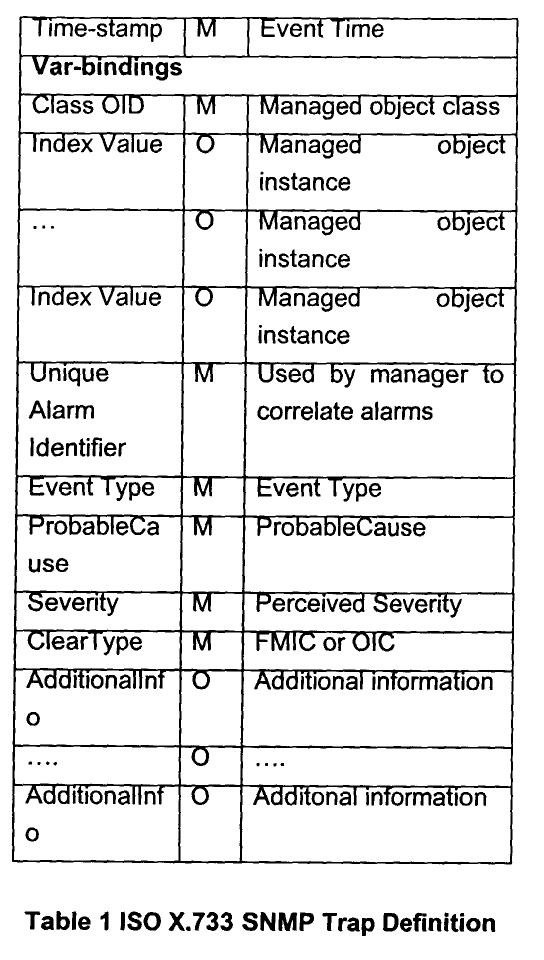

The *Enterprise* and *Trap-id* fields of the trap have no mapping to X.733 and can be passed as Additional information fields.

The *Agent-addr* field is used as the RDN instance value for singleton objects.

The *Time-stamp* field can be used to generate the *Event Time* parameter of X.733.

The *Event Type, ProbableCause* and *Severity* fields map directly onto X.733.

The *ClearType* field indicates whether the system will clear the alarm or requires operator intervention. In essence, it indicates whether there is a corresponding clear trap for the alarm trap or not. If the system will clear it, it is called an FMIC (fault management initiated clear) alarm. If the alarm requires operator intervention or there is no clear trap defined, it is called an OIC (operator initiated clear) alarm.

One of the biggest issues faced when mapping between SNMP Traps and ISO alarms is the identification of the Object Class/Instance. SNMP does not support the concept of managed objects. But knowing the mapping of SNMP to GDMO, the Class OID and Index fields above can be used to identify object instances. The *Class OID* field denotes the OID of the class that issued the alarm. For example, if the *system* class issued a status=ON trap, the **value** of the ClassOID would be the OID of the system (see Figure 3), i.e. 1.3.54.202.2.7.

The Managed object instance is a little more difficult. For singleton objects (like *system*) the *Agent-addr* can be used as the RDN instance. For example, identifying the instance of the *system* object at IP address 175.3.41.253 would be : 1.3.54.202.2.7./ 175.3.41.253 For table objects, the naming attribute will the index column. In the example above this will be the *Slot*. The *Index* field of the trap will then be used to specify the Managed object instance. Note also that an SNMP table may have multiple indexes. All of the indexes are required to specify a particular SNMP table row and so all the indexes are required to specify a managed object instance.

The next main issue is the identification of an alarm. The manager maintains a list of active alarms in the network. On receipt of a trap it must decide whether this is a new alarm (in which case it would add it to active alarm list) or whether this alarm is already in the list. In this latter case, it may be that the new alarm can be dropped as a duplicate or alternatively it may contain new additional information, which may need to be displayed. The invention proposes a *Unique Alarm Identifier* to be generated by the SNMP agent to aid this. The field must be unique in the network and could possibly use a combination of agent IP address, trap id, object instance and additional information.

The following paragraphs describe the content of some sample traps. Consider that there are four traps defined for the system illustrated in Figure 3. These are:
- Status=ON trap from *system*
- Status=OFF trap from *system*
- Cardstatus=ON trap from card in Slot 3
- Cardstatus=OFF trap from card in Slot 3

Assume that the Status=OFF trap is defined to be a Critical, Processing error alarm with a probable cause of *Software program abnormally terminated*. Assume also that the status=ON trap is the clear for the Status=OFF trap. Assume the Enterprise is 1.3.54.202.2 and the agent address of the SNMP agent is 175.3.41.231. Note that *index* field has no relevance in this case and is not sent. Also there is no additional information. The Managed object instance obtained from this mapping would be: *system*/*175.3.41.231*

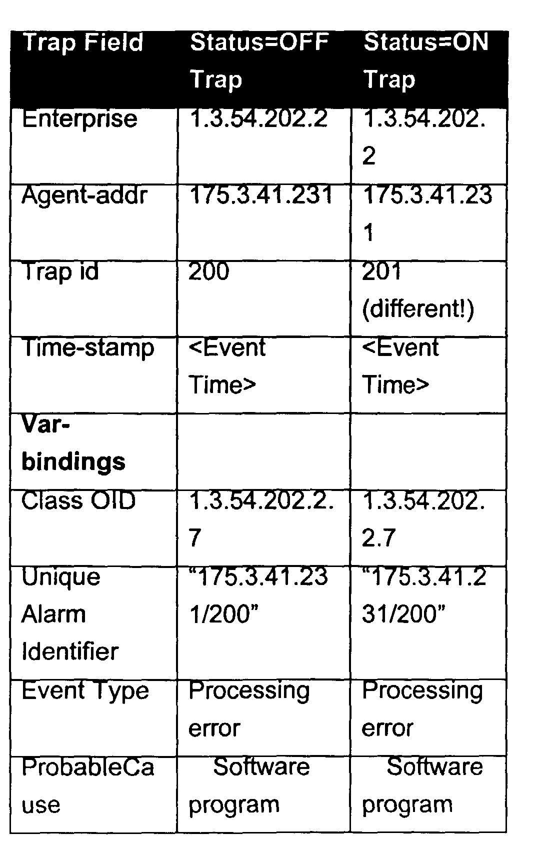

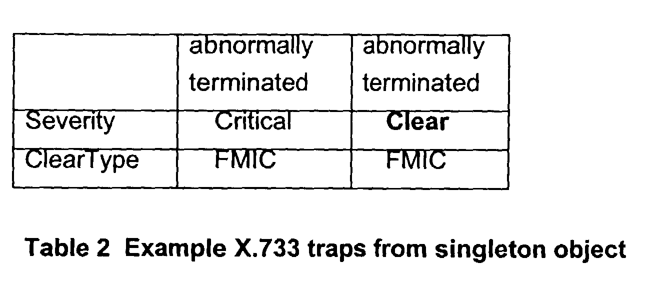

Secondly, assume that the CardStatus=OFF trap is defined to be a Major, Communications error alarm with probable cause Communications subsystem error. Assume also that the CardStatus=ON trap is the clear for the Status=OFF trap. Assume the Enterprise is 1.3.54.202.2 and agent address of SNMP agent is 175.3.41.231. Also assume it is CardTable 3 (i.e. Slot=3) which is in alarm.

Note that the Index of the table identifies the instance of the CardTable, i.e. by the value of the Slot attribute or column. The Managed object instance obtained from this mapping would be: *system/175.3.41.231,CardTable/3*

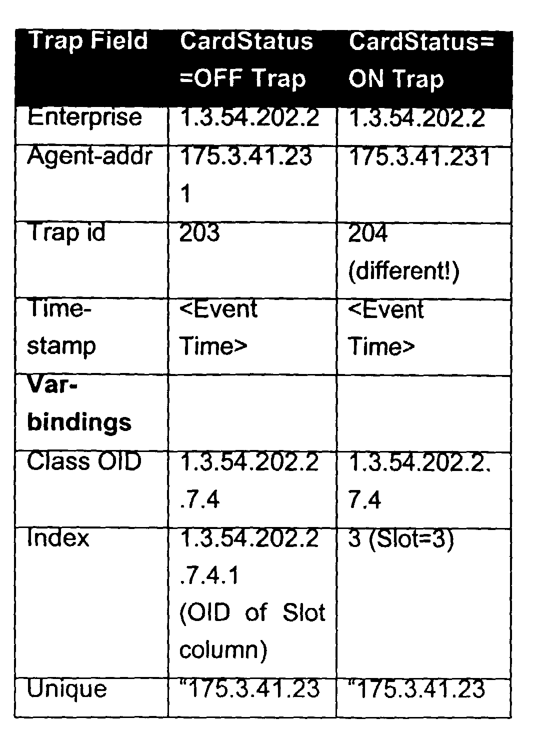

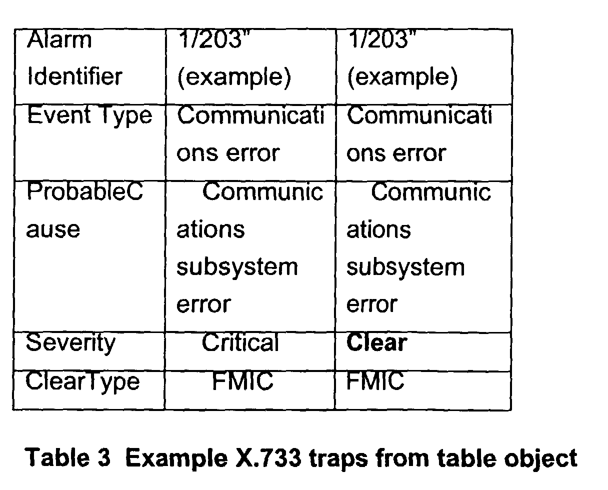

Here below follows a description of other functions that a smart SNMP agent can perform as part of this architecture. The concept of the agent maintaining an active alarm list has been described above. The paragraphs below detail other functions.

### 1. Resynchronisation

The architecture described in Figure 2 defines an active alarm list residing in each SNMP agent 4 and a network-wide alarm list 6 at the manager. These lists can get out of synchronism for a number of reasons, including (a) the agent goes down, (b) manager 7 goes down, (b) intermediate transmission equipment goes down, etc.

Most SNMP agents operate in a connectionless environment using a datagram service such as UDP. This means that there is a **reliability** issue (did the alarm get to the manager?) and an **ordering** (did the clear alarm get to the manager before the alarm itself?) issue.

### 2. Detection of Loss of Synchronisation

Detection of loss of synchronism between a manager 7 and an agent 4 is difficult in a connectionless network. In a connection-oriented network, it is possible for the manager to detect loss of synchronism because it can detect that the link between the manager 7 and agent 4 has gone. Equally, restoration of synchronisation can be established when the link comes back up.

It is proposed herein that, in a connectionless environment, the manager 7 periodically sends a "ping"-type message to each agent 4. If the agent 4 does not respond in a certain time, this will be deemed to be a loss of synchronisation and the manager could issue an alarm to the operator.

### 3. Reliability

In a connectionless network, there is no in-built guarantee that a message reached its destination. Therefore there is no way of knowing that an alarm, for example, reached the manager 7. In SNMPv2, the INFORM operation can be used in which the manager acknowledges the receipt of the trap. If no such service is available, this invention proposes that the agent 4 resends each alarm in its active alarm table after a period of time. Thus, when an alarm is added to the active alarm table 5 in the agent 4, a timer is started. If the alarm is not cleared by the time the timer expires, the agent 4 resends it. At the manager side, if it receives an alarm more than once, it can discard it as a duplicate. To cut down on network traffic associated with re-sending of alarms, the time to re-transmit alarms is configurable.

The above paragraph covers an alarm not getting to the manager. On the other hand. If the clear did not get to the manager, it would remain displayed to the operator at the management station. When the alarm is cleared at the SNMP agent 4, it is removed from the active alarm table and a clear trap is sent to the manager 7. One mechanism to ensure that the clear alarm gets to the manager proposed here is for the agent 4 to maintain a second list of cleared alarms. Using the same mechanism as for the alarms themselves, a timer is started when a clear is sent initially to the manager and the agent then re-sends the clear when the timer expires. The number of times that the clear alarm is re-sent to he manager as well as the timer can be configurable from the manager.

### 4. Ordering

In a connectionless network, the ordering of messages is not guaranteed. In the alarm management scenario, this means that the alarm clear trap may be received by the manager before the alarm itself. The solution proposed above where the cleared alarms are re-sent a configurable number of times solves this issue also. The first time the clear alarm arrives without the corresponding alarm, it is dropped by the manager (maybe logged). Then the alarm arrives and is added to the active alarm table at the manager. When the cleared alarm is re-sent by the agent, it clears the alarm at the manager.

### 5. Throttling

Throttling of alarms on the manager-agent interface is also proposed here. Similar functionality is defined by ISO. It is proposed herein that the manager can manipulate the flow of events that the agent sends to it. Note that all alarms should be logged at the agent for transfer to the manager at a later stage. The manager has the ability to throttle the alarms on the manager-agent interface in terms of all the fields in the alarm (see Table ) including Event Type, Severity or combinations of those fields.

This invention permits an alarm management architecture for a network consisting of a combination of CMIP agents and SNMP agents. It defines functionality required at the manager and the concept of a smart SNMP agent which provides a lot of the functionality which is associated with an OSI agent. It defines an SNMP trap which has enough information to data drive the generation of an equivalent X.733 alarm format at the manager.

Whilst the foregoing description concerns an embodiment which maps an alarm reporting ISO function into SNMP, it is to be understood that other functions can also be adopted by means of the invention. These include;
Object Management Function X.730,
State Management Fucntion X.731,
Event Management Function X.734,
Log Control Function X.735,
Security Alarm Reporting Function X.736,
Security Audit Trail Function X.737.

## Claims

1. A communications network element incorporating a SNMP agent (4) in which said SNMP agent is provided with a trap definition for supporting a conversion to ISO system management functions and in which the trap definition includes (I) a class identifier configured as a variable-binding in the trap for generating a class of a managed object associated with the element, and (ii) at least one instance identifier as a variable-binding in the trap for generating the instance of a managed object associated with the element.

2. A communications network element according to Claim 1 in which the SNMP agent (4) is provided with a trap definition for supporting a conversion to ISO X733 alarm format, wherein the trap definition includes;
a time-stamp field for generating an event time parameter of X733,
an event type field, a probable cause field and a severity field, each for mapping directly onto X733,
a clear type field for indicating whether the system can clear an alarm or operator intervention is required,
a class OID for identifying object instances, and
a unique alarm identifier field.

3. A network management system for managing a communications network and incorporating at least one communications network element according to Claim 1 or Claim 2 and further incorporating a network manager (1).

4. A network management system according to Claim 3 in which the SNMP agent (4) has an IP address, and in which the manager (1) includes means for modeling a SNMP MIB as a GDMO MIB, the GDMO MIB including a system class of one instance, whereby a RDN instance value of a system object equates to the IP address of the SNMP agent (4).

5. A network management system according to Claim 4 in which the GDMO MIB further includes a card table class having multiple instances and in which a RDN instance value associated with the card table class equates to a unique slot attribute.

6. A method of operating a communications network element including the steps of;
(i) incorporating within the element a SNMP agent (4),
(ii) providing said agent with a trap definition which includes;
(a) a class identifier configured as a variable-binding in the trap for generating a class of a managed object associated with the element, and (b) at least one instance identifier configured as a variable-binding in the trap for generating the instance of a managed object associated with the element.

7. A method of managing an alarm condition in the network management system according to any of Claims 3 to 5, including the steps of, in the SNMP agent (4);
sending an alarm message to the network manager,
adding the alarm condition to an alarm list,
starting a first timer having a first expiry period,
waiting for the alarm to clear, and,
re-sending the alarm message to the network manager if the alarm has not cleared before the end of the first expiry period.

8. A method of managing an alarm condition according to Claim 7 and including the further steps of, in the SNMP agent;
maintaining a list of cleared alarms,
starting a second timer having a second expiry period when an alarm clear message is sent to the manager, and
re-sending the alarm clear message at least once after the second expiry period has ended.

9. A method of managing an alarm condition according to Claim 8 including the further steps of, in the network manager (1);
adding a received alarm message to an alarm table (5), and
clearing an existing alarm from the alarm table (5) on receipt of a corresponding alarm message from the SNMP agent (4).

10. A method of detecting loss of synchronism between the network manager and the SNMP agent comprising the network management system according to any of Claims 3 to 5 including the steps of, in the network manager (1);
sending periodically, "ping" type messages to the SNMP agent (4),
waiting for a response from the SNMP agent (4) for a pre-determined period of time,
issuing an alarm signal to an external operator if the response is not received within the pre-determined time period.
